# EUROPÄISCHE PATENTSCHRIFT

(11) **EP 1 405 995 B1**
(45) Veröffentlichungstag und Bekanntmachung des Hinweises auf die Patenterteilung: **26.12.2007**
(21) Anmeldenummer: 02102406.2
(22) Anmeldetag: 02.10.2002
(51) Int. Cl.: F02B 37/00, F02B 37/18, F02M 25/07, F01N 3/28

(54) **Motorsystem mit Abgasturbolader und Abgasrückführung sowie Verfahren zu dessen Betrieb**
Motor system with turbocharger and exhaust gas recirculation as well as method for the operation thereof
Moteur suralimenté par un turbocompresseur à recirculation de gaz d'échappement ainsi que le procédé de fonctionnement de celui-ci

(43) Veröffentlichungstag der Anmeldung: 07.04.2004
(73) Patentinhaber: Ford Global Technologies, LLC, Dearborn, MI 48126 (US)
(72) Erfinder: Reichert, Martina, 50679, Koeln (DE); Backes, Rolf, 52223, Stolberg (DE)
(74) Vertreter: Drömer, Hans-Carsten

(56) Entgegenhaltungen:
- US-B1- 6 301 887
- PATENT ABSTRACTS OF JAPAN vol. 016, no. 434 (M-1308), 10. September 1992 (1992-09-10) & JP 04 148012 A (NISSAN MOTOR CO LTD), 21. Mai 1992 (1992-05-21)
- PATENT ABSTRACTS OF JAPAN vol. 1996, no. 02, 29. Februar 1996 (1996-02-29) & JP 07 259654 A (NISSAN DIESEL MOTOR CO LTD), 9. Oktober 1995 (1995-10-09)
- PATENT ABSTRACTS OF JAPAN vol. 1996, no. 01, 31. Januar 1996 (1996-01-31) & JP 07 238870 A (KOMATSU LTD), 12. September 1995 (1995-09-12)
- PATENT ABSTRACTS OF JAPAN vol. 012, no. 466 (M-772), 7. Dezember 1988 (1988-12-07) & JP 63 189664 A (MITSUBISHI HEAVY IND LTD;OTHERS: 01), 5. August 1988 (1988-08-05)

## Beschreibung

Die Erfindung betrifft ein Motorsystem, mit
a) einer Brennkraftmaschine;
b) einem Abgasturbolader, dessen Turbine in der Abgasleitung und dessen Kompressor in der Einlaßleitung der Brennkraftmaschine angeordnet ist;
c) einer Abgasrückführungsleitung, deren Einlaß stromaufwärts der Turbine in der Abgasleitung und deren Auslaß stromabwärts des Kompressors in der Einlaßleitung der Brennkraftmaschine angeordnet ist, und
d) einer motornahen ("close coupled") Abgasbehandlungseinrichtung, welche in der Abgasrückführungsleitung angeordnet ist.

Ferner betrifft die Erfindung ein Verfahren zum Betrieb eines derartigen Motorsystems.

Um bestehende und zukünftige internationale Emissionsvorschriften für Kraftfahrzeuge zu erfüllen, muß das Potential von Abgasbehandlungseinrichtungen bestmöglich ausgenutzt werden. Für die Startphase eines Kraftfahrzeuges bedeutet dies, daß eine möglichst schnelle Erwärmung der Einrichtungen auf ihre Aktivitätstemperatur anzustreben ist. Dies gilt insbesondere für Dieselmotoren mit Turboladern, welche vergleichsweise geringere Abgastemperaturen als Dieselmotoren ohne Ladedruckerhöhung bzw. als Ottomotoren in einem weiten Betriebsbereich aufweisen.

Zur Reduzierung der Abgasemissionen und zur Begrenzung der Entwicklung von Geräuschen, Vibrationen und Laufunruhe (NVH- Kriterien) werden derzeit Dieselmotoren von Personenkraftwagen (PKW) und Kleinlastwagen (LDV) mit einer externen Abgasrückführung ausgestattet. Die hierfür vorgesehene Abgasrückführungsleitung (im Folgenden kurz: "AGR-Leitung") kann einen Kühler oder Wärmetauscher enthalten, um einerseits dem Motoreinlaß gekühltes Abgas zuführen und andererseits Wärme für die Heizung der Fahrzeugkabine gewinnen zu können. Problematisch bei AGR-Leitungen, insbesondere solchen mit einem Wärmetauscher, ist jedoch, daß diese durch im Abgas enthaltene Teilchen und andere Komponenten (z. B. Kohlenwasserstoffe) verstopft oder kontaminiert werden können. Dies kann zu verringerten Abgasrückführungsraten und damit erhöhten Emissionen oder im schlimmsten Fall sogar zu einem Motorversagen führen. Ein weiteres Problem besteht darin, daß im rückgeführten Abgas enthaltene unverbrannte Kohlenwasserstoffe einen unkontrollierten Anstieg der Motorleistung oder der Drehzahl bewirken können. Dies gilt insbesondere bei hohen Konzentrationen derartiger Stoffe, die zum Beispiel während einer Nacheinspritzung von Kraftstoff auftreten können.

In der US 6 301 887 B1 wird als Stand der Technik ein Motorsystem der eingangs genannten Art beschrieben. Dieses umfaßt eine Brennkraftmaschine mit einem Abgasturbolader und einer AGR-Leitung, die von der Abgasleitung vor der Turbine zur Einlaßleitung hinter dem Kompressor eine Verbindung herstellt. In der AGR-Leitung befinden sich in Strömungsrichtung gesehen nacheinander ein Regelventil, ein Rußfilter sowie ein Wärmetauscher. Durch den Rußfilter werden Teilchen aus dem rückgeführten Abgas entfernt, so daß diese stromabwärtige Einrichtungen nicht mehr beeinträchtigen können. Nachteilig bei einem solchen Motorsystem ist jedoch, daß nach einem Kaltstart der Brennkraftmaschine für lange Zeit verhältnismäßig kühle Abgase abgegeben werden, die von einer noch kalten Abgasbehandlungseinrichtung - falls vorhanden - nicht gereinigt werden können bzw. diese verstopfen können.

In der JP 04148012 A wird als Stand der Technik ein Motorsystem, welche eine Bypassleitung, deren Aulass stromabwärts der Turbine in der Abgasleitung gelegen ist.

Vor diesem Hintergrund war es eine Aufgabe der vorliegenden Erfindung, ein Motorsystem der eingangs genannten Art, insbesondere einen Dieselmotor mit Abgasturbolader und Abgasrückführung, so zu verbessern, daß es dauerhaft mit geringstmöglichen Abgasemmissionen und mit optimalem NVH Verhalten betrieben werden kann.

Diese Aufgabe wird durch ein Motorsystem mit den Merkmalen des Anspruchs 1 sowie durch ein Verfahren mit den Merkmalen des Anspruchs 8 gelöst.

Vorteilhafte Ausgestaltungen sind in den Unteransprüchen enthalten.

Das erfindungsgemäße Motorsystem enthält die folgenden Elemente:
a) Eine Brennkraftmaschine, bei der es sich insbesondere um einen Dieselmotor handeln kann.
b) Einen Abgasturbolader, dessen Turbine in der Abgasleitung der Brennkraftmaschine und dessen mit der Turbine verbundener Kompressor in der Einlaßleitung der Brennkraftmaschine angeordnet ist. Die Turbine wird in bekannter Weise von den die Brennkraftmaschine verlassenden Abgasen in Drehung versetzt. Hierdurch wird wiederum der Kompressor angetrieben, welcher eine Erhöhung des Ladedruckes in der Brennkraftmaschine bewirkt.
c) Eine Abgasrückführungsleitung ("AGR-Leitung"), deren Einlaß stromaufwärts der vorstehend genannten Turbine in der Abgasleitung der Brennkraftmaschine und deren Auslaß stromabwärts des vorstehend genannten Kompressors in der Einlaßleitung der Brennkraftmaschine angeordnet ist. Über die AGR-Leitung kann Abgas vom Auslaß der Brennkraftmaschine zum Einlaß zurückgeführt werden, um das Abgas- und Laufverhalten (NVH) zu verbessern.
d) Eine in der AGR-Leitung angeordnete Abgasbehandlungseinrichtung. Diese wird im Folgenden zur Unterscheidung von einer optional vorhandenen weiteren Abgasbehandlungseinrichtung als "motornah" bezeichnet.

Das Motorsystem ist dadurch gekennzeichnet, daß weiterhin eine Bypaßleitung vorgesehen ist, deren Einlaß stromabwärts der motornahen Abgasbehandlungseinrichtung in der AGR-Leitung und deren Auslaß stromabwärts der Turbine in der Abgasleitung der Brennkraftmaschine gelegen ist.

Das erläuterte Motorsystem kann zum einen durch eine Abgasrückführung effizient betrieben werden, wobei die motornahe Abgasbehandlungseinrichtung sicherstellt, daß die rückgeführten Abgase vor ihrem erneuten Eintritt in die Brennkraftmaschine gereinigt werden. Eine Verstopfung beziehungsweise Kontamination des Abgasrückführungssystems wird hierdurch verhindert. Von besonderer Bedeutung ist darüber hinaus die Bypaßleitung, welche im geöffneten Zustand dem Abgas einen Weg durch die motornahe Abgasbehandlungseinrichtung unter Umgehung der Turbine bereitstellt. Die Lenkung der Abgase durch die motornahe Abgasbehandlungseinrichtung ist insbesondere beim Kaltstart der Brennkraftmaschine vorteilhaft, da sich diese Einrichtung schnell erwärmt und damit rasch eine Beseitigung von Schadstoffen aus dem Abgas bewirkt. Darüber hinaus kann die Bypaßleitung während des normalen Betriebs des Motorsystems bei Bedarf dazu eingesetzt werden, die Leistung des Abgasturboladers und damit den Ladedruck nach Bedarf zu regeln.

Vorzugsweise wird in der AGR-Leitung und in der Bypaßleitung jeweils ein Regelventil vorgesehen, mit dessen Hilfe die Größe des Abgasrückführungsstromes beziehungsweise des die Turbine umgehenden Bypaß-Abgasstromes geregelt werden kann. Insbesondere kann mit Hilfe der Regelventile der jeweilige Abgasstrom auch ganz unterbrochen werden. Das Regelventil der AGR-Leitung ist vorzugsweise stromabwärts des Einlasses der Bypaßleitung angeordnet, damit es den hierdurch fließenden Abgasstrom nicht erfaßt.

Weiterhin ist gemäß einer bevorzugten Ausgestaltung des Motorsystems in der AGR-Leitung stromabwärts der motornahen Abgasbehandlungseinrichtung (und vorzugsweise stromabwärts des Einlasses der Bypaßleitung) ein Wärmetauscher angeordnet. Zur Unterscheidung von einem optional vorhandenen weiteren Wärmetauscher (einem sogenannten Ladeluftkühler, s. u.) wird dieser als "AGR-Wärmetauscher" bezeichnet. Der AGR-Wärmetauscher dient vor allem dazu, dem rückgeführten Abgas Wärme zu entziehen, so daß dieses abgekühlt in den Motor gelangt. Die entzogene Wärme kann z. B. zur Heizung der Fahrzeugkabine genutzt werden. Falls die motornahe Abgasbehandlungseinrichtung ein Katalysator ist, kann der AGR-Wärmetauscher zusätzlich die durch exotherme Reaktionen im Katalysator produzierte Wärme gewinnen und auf diese Weise z. B. bei einem Kaltstart des Motors für eine schnelle Aufheizung der Fahrzeugkabine sorgen.

Ferner kann ein zweiter, sogenannter Ladeluft-Wärmetauscher oder Ladeluftkühler stromabwärts hinter dem Kompressor des Abgasturboladers in der Einlaßleitung der Brennkraftmaschine vorgesehen werden. Dieser kann in bekannter Weise die komprimierte Ladeluft kühlen und damit eine höhere Effizienz der Brennkraftmaschine gewährleisten. Falls ein derartiger Ladeluft-Wärmetauscher vorhanden ist, kann der Auslaß der AGR-Leitung entweder stromaufwärts oder stromabwärts von ihm an der Einlaßleitung angeordnet sein. Die Gefahr einer Verschmutzung des Ladeluft-Wärmetauschers durch Abgas reduziert sich somit wesentlich bzw. besteht nicht mehr bei Verwendung eines Dieselpartikelfilters, da das rückgeführte Abgas durch die motornahe Abgasbehandlungseinrichtung gereinigt ist.

Bei einer bevorzugten Weiterbildung des Motorsystems ist in der Abgasleitung der Brennkraftmaschine stromabwärts der Turbine des Abgasturboladers eine weitere Abgasbehandlungseinrichtung angeordnet. Diese wird vom gesamten Abgas durchströmt und sorgt für dessen vollständige Reinigung. Sie wird daher auch als die "hauptsächliche" Abgasbehandlungseinrichtung bezeichnet. Aus Platzgründen kann diese in verhältnismäßig großer Entfernung von der Brennkraftmaschine angeordnet sein.

Die motornahe Abgasbehandlungseinrichtung und/oder die vorstehend erwähnte hauptsächliche Abgasbehandlungseinrichtung können einen Oxidationskatalysator, welcher insbesondere Kohlenwasserstoffe und Kohlenmonoxid oxidiert, einen Denox-Katalysator, welcher NOₓ-Verbindungen reduziert, und/oder einen Partikelfilter (DPF), welcher insbesondere Rußpartikel zurückhält, und welcher auch katalytisch beschichtet sein kann (CDPF). Vorzugsweise liegt eine Kombination dieser Möglichkeiten vor, damit das Abgas umfassend von allen schädigenden Komponenten gereinigt wird.

Die Erfindung betrifft weiterhin ein Verfahren zum Betrieb eines Motorsystems der oben erläuterten Art. Das Verfahren ist dadurch gekennzeichnet, daß während des Warmlaufens der Brennkraftmaschine nach deren Kaltstart der Abgasstrom unter Umgehung der Turbine des Abgasturboladers ganz oder teilweise durch die motornahe Abgasbehandlungseinrichtung und die Bypaßleitung in die Abgasleitung stromabwärts der Turbine geleitet wird. Während des Warmlaufens der Brennkraftmaschine hat ein üblicherweise vorhandener, nahe dem Auspuff in der Abgasleitung angeordneter Katalysator ("hauptsächliche Abgasbehandlungseinrichtung") noch nicht seine Betriebstemperatur erreicht, so daß dieser die Abgasemissionen nicht oder nur teilweise reduzieren kann. Die motornahe Abgasbehandlungseinrichtung kann dagegen aufgrund ihres kurzen effektiven Abstandes zur Brennkraftmaschine sowie ihrer in der Regel geringeren Größe sehr viel früher ihre Betriebstemperatur erreichen. Zur Minimierung der Abgasemissionen ist es daher von Vorteil, während des Kaltstarts einen möglichst großen Abgasstrom über die motornahe Abgasbehandlungseinrichtung zu leiten. Ein hoher Abgasstrom hat zusätzlich den selbstverstärkenden Effekt, das Aufheizen der motornahen Abgasbehandlungseinrichtung noch zu beschleunigen. Davon unabhängig kann während des Warmlaufens der Brennkraftmaschine noch eine Abgasrückführung im üblichen Ausmaß durchgeführt werden.

Gemäß einer Weiterbildung des Verfahrens wird bei warmgelaufener Brennkraftmaschine die Bypaßleitung nur noch nach Bedarf geöffnet, um den Abgasstrom über die Turbine und damit die Leistung des Abgasturboladers bzw. den Ladedruck zu regeln sowie verbrennungstechnisch sinnvolle Abgasrückführraten zu realisieren. Maßnahmen zur Regelung des Ladedruckes wie z. B. den Einsatz einer Turbine mit variabler Geometrie (VGT) können daher vereinfacht oder eliminiert werden.

Durch einen länger andauernden Einsatz kommt es bei manchen Arten von Abgasbehandlungseinrichtungen (z. B. Partikelfilter, Denox-Katalysator) zu einer zunehmenden Beladung mit Schadstoffen und damit einer sinkenden Leistungsfähigkeit der Einrichtung. Vorzugsweise wird daher die motornahe Abgasbehandlungseinrichtung bei Bedarf durch Einstellung geeigneter Abgasparameter regeneriert. Geeignete Parameter sind z. B. eine erhöhte Abgastemperatur und/oder ein höherer Kohlenwasserstoff- oder Kohlenmonoxidgehalt, die zu einem thermischen bzw. chemischen Vermindern der angesammelten Rückstände führen.

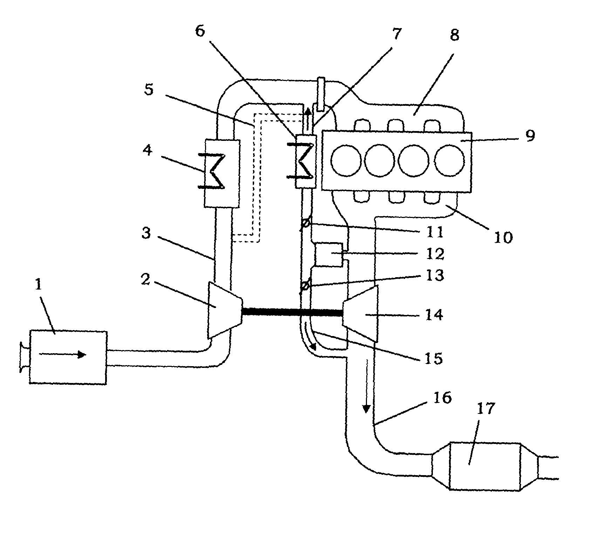

Im Folgenden wird die Erfindung anhand der Figur beispielhaft näher erläutert.

Die einzige Figur zeigt schematisch die Komponenten eines erfindungsgemäßen Motorsystems.

Im Mittelpunkt des Motorsystems steht ein Vierzylinder-Dieselmotor 9 mit einem Ansaugkrümmer 8 sowie einem Abgaskrümmer 10. Dem Ansaugkrümmer 8 wird Frischluft über eine Einlaßleitung 3 zugeführt, in welcher in Strömungsrichtung (Pfeil) gesehen nacheinander ein Luftfilter 1, der Kompressor 2 eines Abgasturboladers sowie ein "Ladeluft"-Wärmetauscher 4 als Kühler angeordnet sind.

An den Abgaskrümmer 10 ist eine Abgasleitung 16 angekoppelt, welche die Abgase zu einem Auspuff (nicht dargestellt) leitet. In Strömungsrichtung (Pfeil) gesehen sind in der Abgasleitung 16 nacheinander die Turbine 14 des Abgasturboladers und eine "hauptsächliche" Abgasbehandlungseinrichtung 17 angeordnet. Die hauptsächliche Abgasbehandlungseinrichtung 17 kann insbesondere eine Kombination sein aus einem Partikelfilter (DPF), welcher Rußpartikel aus dem Abgas entfernt, einem Oxidationskatalysator, welcher unvollständig verbrannte Kohlenwasserstoffe HC und Kohlenmonoxid CO oxidiert und einem Denox-Katalystor, der Nox-Verbindungen speichert und unter einzustellenden Motorbedingungen in unschädliche Bestandteile umwandelt.

Des Weiteren weist das dargestellte Motorsystem eine Abgasrückführung mit einer AGR-Leitung 7 auf, deren Einlaß an der Abgasleitung 16 zwischen dem Abgaskrümmer 10 und der Turbine 14 und deren Auslaß an der Einlaßleitung 3 zwischen dem Ladeluft-Wärmetauscher 4 und dem Ansaugkrümmer 8 angeordnet ist.

Die AGR-Leitung 7 enthält in Strömungsrichtung (Pfeil) gesehen nacheinander eine motornahe Abgasbehandlungseinrichtung 12, ein AGR-Regelventil 11 sowie einen "AGR"-Wärmetauscher 6.

Ferner ist in der Figur eine Bypaßleitung 15 erkennbar, deren Einlaß in der AGR-Leitung 7 zwischen der motornahen Abgasbehandlungseinrichtung 12 und dem AGR-Regelventil 11 angeordnet ist. Der Auslaß der Bypaßleitung 15 mündet stromabwärts hinter der Turbine 14 in die Abgasleitung 16. Zur Steuerung des Abgasstromes durch die Bypaßleitung 15 enthält diese ein Bypaß-Regelventil 13.

Wie durch die gestrichelte Linie 5 angedeutet, könnte der Auslaß der AGR-Leitung 7 alternativ auch zwischen dem Kompressor 2 und dem Ladeluft-Wärmetauscher 4 in die Einlaßleitung 3 münden. Dies kommt insbesondere dann in Betracht, wenn die motornahe Abgasbehandlungseinrichtung 12 einen Partikelfilter enthält, so daß Ruß aus dem rückgeführten Abgas entfernt wird und dieses den Ladeluft-Wärmetauscher 4 nicht zusetzen kann. Die motornahe und die hauptsächliche Abgasbehandlungseinrichtung 12 und 17 können im Übrigen Oxidationskatalysatoren, Denox-Katalysatoren, Diesel-Partikelfilter (DPF) und/oder katalytisch beschichtete Diesel-Partikelfilter (CDPF) sowie jede sinnvolle Kombination dieser Möglichkeiten enthalten. Typischerweise werden die Abgasbehandlungseinrichtungen so ausgelegt, daß sie sowohl einen katalytischen Effekt als auch einen Filtrationseffekt haben, wobei der katalytische Effekt
- den Gehalt an Kohlenwasserstoffen (HC) und Kohlenmonoxid (CO) im Gasfluß reduziert und
- einen Temperaturanstieg durch die exotherme Konversion von Kohlenwasserstoffen oder Kohlenmonoxid erzeugt,
und wobei die Filtration
- Ruß aus dem Abgas entfernt und ihn ansammelt, bis die entsprechende Filteranordnung unter ausreichend hohen Temperaturen (aktiv oder passiv initiiert) regeneriert wird.

Beim Betrieb des beschriebenen Motorsystems werden drei verschiedene Phasen unterschieden:

### 1. Motorstart mit kalter Brennkraftmaschine

Durch (vollständiges) Öffnen des Bypaßregelventils 13 wird das Abgas, welches normalerweise über die Turbine 14 fließt, an der Turbine vorbeigeleitet. Dabei durchströmt es die motornahe Abgasbehandlungseinrichtung 12, welche aufgrund ihrer großen Nähe zur Brennkraftmaschine 9, ihrer geringeren Masse sowie des hohen Abgasstromes sehr schnell ihre Betriebstemperatur erreicht hat und daher das sie durchströmende Abgas reinigen kann. Obwohl die hauptsächliche Abgasbehandlungseinrichtung 17 noch nicht aktiv ist, verläßt daher nur gereinigtes Abgas das Kraftfahrzeug.

Ein weiterer Vorteil der beschriebenen Umgehung der Turbine 14 liegt in einer schnelleren Erwärmung und damit Aktivierung der hauptsächlichen Abgasbehandlungseinrichtung 17, da dem Abgas nicht beim Passieren der Turbine 14 Wärme entzogen wird.

Weiterhin kann durch das beschriebene Startverfahren eine positive Beeinflussung der Kabinenheizung des Fahrzeuges stattfinden, wenn durch Öffnen des AGR-Regelventils 11 ein Strom an rückgeführtem Abgas über den AGR-Wärmetauscher 6 geleitet wird. Der Wärmetauscher 6 gewinnt dabei sowohl Wärme aus im motornahen Katalysator 12 stattfindenden exothermen Reaktionen als auch aus einer erhöhten Abgastemperatur am Motorauslaß aufgrund eines verringerten Wirkungsgrades des Motors.

### 2. Normalbetrieb

Bei betriebswarmwer Brennkraftmaschine 9 und Erreichen der Betriebstemperatur der hauptsächlichen Abgasbehandlungseinrichtung 17 wird das Bypaß-Regelventil 13 nur noch bei Bedarf geöffnet, um den Abgasstrom durch die Turbine 14 und damit die Leistung des Turboladers sowie den Ladedruck zu regeln bzw. zu begrenzen. Dies entspricht im Wesentlichen der Funktion eines sogenannten waste gate. Der hauptsächliche Abgasstrom fließt dabei durch die Turbine 14, während ein über die motornahe Abgasbehandlungseinrichtung 12 abgezweigter Abgasstrom in einen rückgeführten Abgasstrom durch die AGR-Leitung 7 und einen Bypaß-Strom durch die Bypaßleitung 15 aufgeteilt wird.

Die motornahe Abgasbehandlungseinrichtung 12 schützt sowohl den AGR-Wärmetauscher 6 als auch die Brennkraftmaschine 9 vor einer Kontamination, Eintrag und/oder einer Verstopfung durch Abgaskomponenten wie Partikel oder Kohlenwasserstoffen. Während einer Einspritzung von Kraftstoff, die zu erhöhten Mengen an unverbranntem Kraftstoff im Abgas führt, konvertiert sie solche Kohlenwasserstoffe zu CO₂. Die Kohlenwasserstoffe erreichen daher nicht mehr die Brennkraftmaschine 9, was einen unerwünschten vorübergehenden Anstieg der Motorleistung und/oder der Motordrehzahl verhindert.

### 3. Reinigung der Abgasbehandlungseinrichtungen

Falls eine diskontinuierliche regenerierende Abgasnachbehandlungseinrichtung wie z. B. ein Dieselpartikelfilter (DPF) oder ein Denox-Katalysator in einer der Abgasbehandlungseinrichtungen 12, 17 enthalten ist, kann diese bei Bedarf mit Hilfe von an sich bekannten Maßnahmen regeneriert werden. Zu derartigen Maßnahmen gehört insbesondere eine Temperaturerhöhung des Abgases, welche ein Verbrennen der angesammelten Partikel bewirkt.

Das beschriebene Motorsystem und das zugehörige Betriebsverfahren bieten effiziente Lösungen für eine Reihe von Problemen und Anforderungen, zum Beispiel:

| **Problem/Forderung** | **Lösung** |
|---|---|
| AGR-Leitung bzw. dort befindlicher Wärmetauscher werden von Kohlenwasserstoffen und Ruß kontaminiert | Motornahe Abgasbehandlungseinrichtung 12 konvertiert Kohlenwasserstoffe und entfernt Ruß |
| | |
| Hohe Emissionen während eines Kaltstarts der Brennkraftmaschine | Motornahe Abgasbehandlungseinrichtung 12 heizt sich schneller auf und konvertiert HC und CO früher als die hauptsächliche Abgasbehandlungseinrichtung 17 |
| | |
| Kabinenheizung | Exotherme Reaktionen in der motornahen Abgasbehandlungseinrichtung 12 erzeugen Wärme, welche vom Wärmetauscher 6 rückgewonnen wird |
| | |
| Unkontrollierte Erhöhung der Motorleistung/Drehzahl aufgrund von unverbrannten Kohlenwasserstoffen oder Kohlenmonoxid im Abgas (zum Beispiel während der Regeneration eines DPF oder bei einem fetten Betrieb für eine NOx-Reduktion) | Alle Kohlenwasserstoffe werden in der motornahen Abgasbehandlungseinrichtung 12 konvertiert |
| | |
| Dieselpartikelfilter DPF benötigt eine Regeneration | Exotherme Reaktionen im motornahen Katalysator erzeugen Hitze zum Erreichen der Regenerationstemperaturen; zu diesem Zweck müssen durch eine Motorsteuerung zusätzliche Kohlenwasserstoffe bzw. Kohlenmonoxid bereitgestellt werden |

## Patentansprüche

1. Motorsystem, mit
a) einer Brennkraftmaschine (9);
b) einem Abgasturbolader, dessen Turbine (14) in der Abgasleitung (16) und dessen Kompressor (2) in der Einlaßleitung (3) der Brennkraftmaschine angeordnet ist;
c) einer Abgasrückführungsleitung (7), deren Einlaß stromaufwärts der Turbine (14) in der Abgasleitung (16) und deren Auslaß stromabwärts des Kompressors (2) in der Einlaßleitung (3) der Brennkraftmaschine (9) angeordnet ist, und
d) einer motornahen Abgasbehandlungseinrichtung (12), welche in der Abgasrückführungsleitung (7) angeordnet ist;
**gekennzeichnet durch**
eine Bypaßleitung (15), deren Einlaß stromabwärts der motornahen Abgasbehandlungseinrichtung (12) in der Abgasrückführungsleitung (7) und deren Auslaß stromabwärts der Turbine (14) in der Abgasleitung (16) gelegen ist.

2. Motorsystem nach Anspruch 1,
**dadurch gekennzeichnet, daß**
in der Abgasrückführungsleitung (7) und in der Bypaßleitung (15) jeweils ein Regelventil (11, 13) angeordnet ist.

3. Motorsystem nach Anspruch 1 oder 2,
**dadurch gekennzeichnet, daß**
in der Abgasrückführungsleitung (7) stromabwärts der motornahen Abgasbehandlungseinrichtung (12) ein AGR-Wärmetauscher (6) angeordnet ist.

4. Motorsystem nach mindestens einem der Ansprüche 1 bis 3,
**dadurch gekennzeichnet, daß**
stromabwärts des Kompressors (2) ein Ladeluft-Wärmetauscher (4) in der Einlaßleitung (3) angeordnet ist.

5. Motorsystem nach mindestens einem der Ansprüche 1 bis 4,
**dadurch gekennzeichnet, daß**
in der Abgasleitung (16) der Brennkraftmaschine (9) stromabwärts der Turbine (14) eine weitere Abgasbehandlungseinrichtung (17) angeordnet ist.

6. Motorsystem nach mindestens einem der Ansprüche 1 bis 5,
**dadurch gekennzeichnet, daß**
die Abgasbehandlungseinrichtungen (12, 17) einen Oxidationskatalysator, eine Stickoxidfalle, einen Teilchenfilter und/oder einen katalytisch beschichteten Teilchenfilter umfassen.

7. Motorsystem nach mindestens einem der Ansprüche 1 bis 6,
**dadurch gekennzeichnet, daß**
die Brennkraftmaschine als Dieselmotor (9) ausgebildet ist.

8. Verfahren zum Betrieb eines Motorsystems nach mindestens einem der Ansprüche 1 bis 7,
**dadurch gekennzeichnet, daß**
während des Warmlaufens der Brennkraftmaschine (9) ein Abgasstrom durch die motornahe Abgasbehandlungseinrichtung (12) und die Bypaßleitung (15) geleitet wird.

9. Verfahren nach Anspruch 8,
**dadurch gekennzeichnet, daß**
bei warmgelaufener Brennkraftmaschine (9) die Bypaßleitung (15) nur nach Bedarf zur Regelung der Turbine (14) geöffnet wird.

10. Verfahren nach Anspruch 8 oder 9,
**dadurch gekennzeichnet, daß**
die motornahe Abgasbehandlungseinrichtung (12) durch Einstellung geeigneter Abgasparameter bei Bedarf regeneriert wird.

## Claims

1. Engine system, comprising
a ) an internal combustion engine (9);
b ) an exhaust turbocharger, the turbine (14) of which is arranged in the exhaust line (16) and the compressor (2) of which is arranged in the intake line (3) of the internal combustion engine;
c ) an exhaust gas recirculation line (7) the inlet of which is arranged upstream of the turbine (14) in the exhaust line (16) and the outlet of which is arranged downstream of the compressor (2) in the inlet line (3) of the internal combustion engine (9), and
d ) an exhaust gas treatment device (12) which is in proximity to the engine and which is arranged in the exhaust gas recirculation line (7);
**characterized by** a bypass line (15), the inlet of which is situated downstream of the exhaust gas treatment device (12) in proximity to the engine in the exhaust gas recirculation line (7), and the outlet of which is situated downstream of the turbine (14) in the exhaust line (16).

2. Engine system according to Claim 1, **characterized in that** one control valve (11, 13) each is arranged in the exhaust gas recirculation line (7) and in the bypass line (15).

3. Engine system according to Claim 1 or 2, **characterized in that** an exhaust gas recirculation heat exchanger (6) is arranged in the exhaust gas recirculation line (7) downstream of the exhaust gas treatment device (12) in proximity to the engine.

4. Engine system according to at least one of Claims 1 to 3, **characterized in that** a charge air heat exchanger (4) is arranged in the inlet line (3) downstream of the compressor (2).

5. Engine system according to at least one of Claims 1 to 4, **characterized in that** a further exhaust gas treatment device (17) is arranged in the exhaust line (16) of the internal combustion engine (9) downstream of the turbine (14).

6. Engine system according to at least one of Claims 1 to 5, **characterized in that** the exhaust gas treatment devices (12, 17) comprise an oxidation catalytic converter, a nitrogen oxide trap, a particle filter and/or a catalytically coated particle filter.

7. Engine system according to at least one of Claims 1 to 6, **characterized in that** the internal combustion engine is embodied as a diesel engine (9).

8. Engine system according to at least one of Claims 1 to 7, **characterized in that** whilst the internal combustion engine (9) is warming up an exhaust gas flow is fed through the exhaust gas treatment device (12) in proximity to the engine and through the bypass line (15).

9. Engine system according to Claim 8, **characterized in that** when the internal combustion engine (9) has warmed up the bypass line (15) is opened only as necessary in order to control the turbine (14).

10. Engine system according to Claim 8 or 9, **characterized in that** the exhaust gas treatment device (12) in proximity to the engine is regenerated as necessary by setting suitable exhaust gas parameters.

## Revendications

1. Système de moteur qui présente :
a) un moteur à combustion interne (9),
b) un turbocompresseur dont la turbine (14) est disposée dans le conduit (16) des gaz d'échappement et dont le compresseur (2) est disposé dans le conduit d'admission (3) du moteur à combustion interne,
c) un conduit (7) de recirculation des gaz d'échappement dont l'admission est disposée en amont de la turbine (14) dans le conduit (16) des gaz d'échappement et dont la sortie est disposée en aval du compresseur (2) dans le conduit (3) du moteur à combustion interne (9) et
(d) un dispositif (12) de traitement des gaz d'échappement disposé à proximité du moteur dans le conduit (7) de recirculation des gaz d'échappement,
**caractérisé par** :
un conduit de dérivation (15) dont l'admission est située en aval du dispositif (12) de traitement des gaz d'échappement proche du moteur dans le conduit (7) de recirculation des gaz d'échappement et dont la sortie est située en aval de la turbine (14) dans le conduit (16) des gaz d'échappement.

2. Système de moteur selon la revendication 1, **caractérisé en ce que** des soupapes de régulation (11, 13) sont disposées respectivement dans le conduit (7) de recirculation des gaz d'échappement et dans le conduit de dérivation (15).

3. Système de moteur selon les revendications 1 ou 2, **caractérisé en ce qu'**un échangeur de chaleur AGR (6) est disposé dans le conduit (7) de recirculation des gaz d'échappement en amont du dispositif (12) de traitement des gaz d'échappement proche du moteur.

4. Système de moteur selon au moins l'une des revendications 1 à 3, **caractérisé en ce qu'**un échangeur de chaleur (4) d'air de suralimentation est disposé dans le conduit d'admission (3) en aval du compresseur (2).

5. Système de moteur selon au moins l'une des revendications 1 à 4, **caractérisé en qu'**un autre dispositif (17) de traitement des gaz d'échappement est disposé dans le conduit (16) des gaz d'échappement du moteur à combustion interne (9) en aval de la turbine (14).

6. Système de moteur selon au moins l'une des revendications 1 à 5, **caractérisé en ce que** les dispositifs (12, 17) de traitement des gaz d'échappement comprennent un catalyseur d'oxydation, un piège à oxydes d'azote, un filtre à particules et/ou un filtre à particules à revêtement catalytique.

7. Système de moteur selon au moins l'une des revendications 1 à 6, **caractérisé en ce que** le moteur à combustion interne est un moteur diesel (9).

8. Procédé d'utilisation d'un système de moteur selon au moins l'une des revendications 1 à 7, **caractérisé en ce que** pendant l'échauffement du moteur à combustion interne (9), un écoulement des gaz d'échappement est passé à travers le dispositif (12) de traitement des gaz d'échappement proche du moteur et le conduit de dérivation (15).

9. Procédé selon la revendication 8, **caractérisé en ce que** lorsque le moteur à combustion interne (9) est chaud, le conduit de dérivation (15) n'est ouvert qu'en fonction des besoins, pour régler la turbine (14).

10. Procédé selon les revendications 8 ou 9, **caractérisé en ce que** le dispositif (12) des gaz d'échappement proche du moteur est régénéré en cas de besoin par établissement de paramètres appropriés des gaz d'échappement.
